# EUROPEAN PATENT APPLICATION

(11) **EP 2 624 134 A1**
(43) Date of publication of application: **07.08.2013**
(21) Application number: 12000599.6
(22) Date of filing: 31.01.2012
(51) Int. Cl.: G06F 9/45

(54) **Method and apparatus for mapping a communication system on a multicore processor**

(71) Applicant: MIMOON GmbH, 47057 Duisburg (DE)
(72) Inventor: Chen, Rong, 47057 Duisburg (DE)
(74) Representative: Eisenführ, Speiser & Partner

(57) **Abstract**

The present invention relates to a method and apparatus for mapping a communication system on a multi-core processor, wherein the communication system is divided into a plurality of sub-functions and information about code size and data memory size for each sub-function is extracted from a profiling report. Sub-functions to be executed on same types of processor cores are integrated into top-level modules which are placed and routed on the multi-core processor so as to generate top-level source code for each processor core.

## Description

### FIELD OF THE INVENTION

The present invention relates to a method, apparatus and computer program product for programming a multi-core processor so as to map components of a communication system, e.g. a wireless communication system.

### BACKGROUND OF THE INVENTION

The 3^{rd} Generation Partnership Project (3GPP) Long Term Evolution (LTE) is the latest wireless standard, which is upgraded from 2G and 3G networks and is still evolving. Since 2G and 3G networks have been vastly developed and are serving billions of subscribers, the LTE network shall coexist with the 2G and 3G networks for a very long time and will act as overlay network. Furthermore, due to the slow deploying speed, the LTE network cannot spread as widely as existing 2G/3G networks, so that 2G/3G networks will act as an underlay network of the LTE network. It is therefore required that LTE devices are configured to support various wireless standards such as 2G/3G or WI-FI, WiMAX (World-wide Interoperability for Microwave Access) and so on. Software Defined Radio (SDR) is an attractive technology to support multiple wireless standards. If baseband signal processing of various wireless standards can be implemented on a processor in software, various wireless standards can be switched softly. Furthermore, functionalities can be programmed, reconfigured and updated quickly and easily.

As more and more powerful multi-core processors have been designed, baseband processing of LTE or other communication systems can be mapped into a multi-core processor. Thereby, all physical layer functions of such systems can be implemented on a multi-core processor in a programming language, such as C language.

Some programming models like Message Passing Interface (MPI) or Open Multi-Processing (OpenMP) have been developed for personal multi-core computers or super computers. However, programming models like MPI/OpenMP cannot be used on embedded multi-core processors, due to their heterogeneous architecture and specific applications like wireless systems. In order to use the programming power of an application specific multi-core processor, wireless baseband processing had to be mapped manually on the multi-core processor and a top-level code had to be written. Then, if the architecture of the multi-core processor has evolved, the adapted software had to be evolved as well. The top-level code had to be re-written according to the evolved architecture of the multi-core processor, which makes reuse, changing and refactoring of software difficult.

### SUMMARY OF THE INVENTION

It is an object of the present invention to provide an improved maintenance of system software which is related to the architecture of the multi-core processor.

This object is achieved by a method as claimed in claim 1, an apparatus as claimed in claim 13 and a computer program product as claimed in claim 15.

Accordingly, the communication system can be automatically mapped to changes of a multi-core processor architecture by dividing the communication system into a plurality of sub-functions which communicate with each other by uni-directional connections and wherein interface and memory size of input buffer and output buffer as well as scratch memory for each sub-function are declared explicitly, extracting information about code size and data memory size for each sub-function from a profiling report, integrating sub-functions to be executed on same types of processor cores into top-level modules, placing and routing the top-level modules on the multi-core processor, and generating top-level source code for each processor core. Thereby, top-level code can be automatically generated, which makes the software retargetable.

Mapping or re-mapping of communication systems on multi-core-processors can thus be done automatically and any change in the processor architecture, such as change of the number of cores or the features of software can be re-mapped easily.

Automatic mapping means that the source code as well as test benches for top-level modules and for each processor core can be generated automatically, while the development of sub-functions of the communication system could be done manually and used as an input to the mapping process.

More specifically, four sorts or types of information could be inputted to the proposed automatic source code generator or source code process. These types include a profiling report, a flowchart of top-level modules, hints of place and route of the multi-core processor, and a topology of the multi-core processor. The profiling report may include cycle counts and memory size of each sub-function. The cycle counts can be generated from testing results of sub-functions and the memory size can be generated from executable binary codes of the sub-functions. The profiling report can be generated automatically based on a name of the sub-function, configuration of a worst-case test, name of global variables, name of input buffer, name of scratch memory, and name of output buffer. The source code for a top-level module can then be generated from the flowchart of the top-level module. The flowchart could be written in C language, wherein all constant, structure, variable and function definitions for the top-level module can be generated from the flowchart of the top-level module and the source code of sub-functions which are included in the flowchart.

To achieve an automatic mapping, the topology of the multi-core processor should be defined and, from programming point of view, the source processor and destination processor as well as bandwidth (or buffer size) of communication channels on the multi-core processor should be defined. In order to obtain an efficient placing and routing, some hints about how to place and route top-level modules on processor cores could be supplied. Based on the hints of place and route, the source code for each processor can be generated automatically. Placing and routing may comprise defining a source processor, a destination processor and a bandwidth or buffer size of communication channels on the multi-core processor.

The profiling report may comprise a cycle counts report obtained from a worst-case test and times of call of the sub-function per sub-frame. Furthermore, the profiling report may comprise a memory size report obtained from global variables, input buffer, scratch memory and output buffer of the sub-function.

As regards the division of the communication system into sub-functions, the transmitter side of a communication device, such as a user equipment (UE) or a base station (e.g. Node B in LTE terminology) could be divided into a bit processing sub-function, a complex symbol processing sub-function and a baseband signal generator sub-function. Similarly, the receiver side of the communication device could be divided into a baseband signal processing sub-function, a complex symbol processing sub-function, and a soft bit processing sub-function. Optionally, these sub-functions could then be divided into common sub-functions which exist in a transmitter side and a receiver side of the communication device, and specific sub-functions which exist only in the transmitter side or the receiver side.

The profiling report could be used to extract cycle counts of each sub-function based on a list of all sub-functions with worst-case test for each sub-function and number of times to execute a sub-function per sub-frame.

Furthermore, information about code size and data memory size could be extracted from executable binary code of a test bench of each sub-function.

Additionally, a flowchart which describes how sub-functions are executed sequentially in one top-level module may be generated, wherein the source code is then automatically generated based on the flowchart. Additionally, an execution path of sub-functions could be determined based on the flowchart.

The topology of the multi-core processor could be defined by connections between processors, wherein one connection only comprises one source processor and one destination processor.

Source code generation could be adapted to create a thread for an input connection of a processor core, wherein an entry function of the thread is adapted to fetch data from the input connection, process the data by executing at least one top-level module, and send processed data to an output connection of the processor core.

The above features may be implemented as hardware circuits integrated on a single chip or chip set, or wired on a circuit board. As an alternative, at least parts of the features may be implemented as a software program or routine controlling a processor or computer device. As an example, the software program or routine may be implemented in C type programming language.

Other advantageous modifications are defined in the dependent claims.

### BRIEF DESCRIPTION OF THE DRAWINGS

The invention will now be described in greater detail based on embodiments with reference to the accompanying drawings in which:
Fig. 1 shows a schematic block diagram of a mapping system according to various embodiments;
Fig. 2 shows an exemplary modularization of a wireless system;
Fig. 3 shows an example of a cycle counts report;
Fig. 4 shows an example of a memory size report;
Fig. 5 shows an automated integrator of sub-functions and a generator of source code for obtained top-level modules according an embodiment;
Fig. 6 shows an example of a topology description of a multi-core processor from a programming point of view;
Fig. 7 shows an automated source code generator for each processor core according to the embodiment; and
Fig. 8 shows a schematic block diagram of a software-based implementation according to another embodiment.

### DESCRIPTION OF THE EMBODIMENTS

In the following, embodiments of the present invention will be described based on a mapping of a wireless system on an embedded multi-core processor.

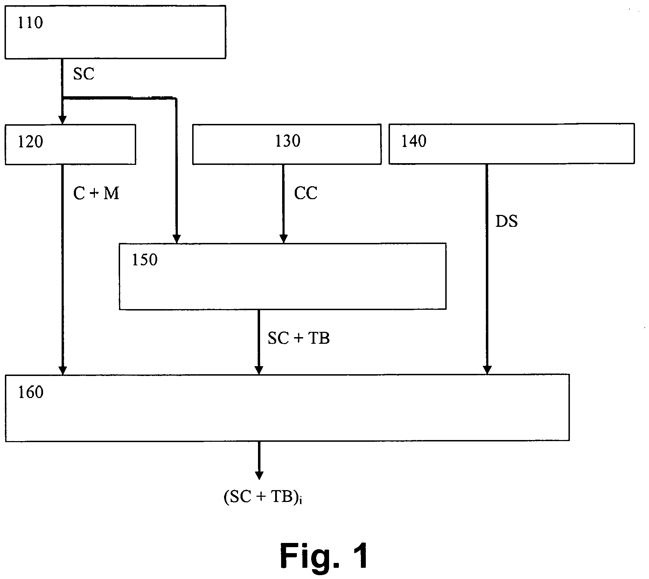

Fig. 1 shows a block diagram of components or procedures involved in a working flow of mapping the wireless system on the embedded multi-core processor. In a sub-function development stage or process 110 programming, testing and profiling of defined sub-functions is done in a systematic way, wherein source code (SC) and testing results of sub-functions are supplied to a profiling stage or process 120 and an integration stage or process 150. In the integrating stage 150, sub-functions are integrated into top-level modules, which makes placing and routing easier. Furthermore, a control code (CC) can be provided by a flowchart generating stage or process 130 which generates a flowchart of top-level modules. The profiling stage 120 provides cycle counts (C) and memory sizes (M) of each sub-function and supplies this information to a source code generator or source code generating stage or process 160. Additionally, the integrating stage 150 provides for each top-level module a source code (SC) and test bench (TB) to the source code generator 160. In addition, a topology defining stage or process 140 provides a data structure (DS) defining the topology of the multi-core processor. Based on the above input information, the source code generator 160 automatically generates source code and a test bench (SC + TB)ᵢ for each processor core i. The above test benches may be any kind of benchmark data indicating the performance of the sub-function or the top-level module.

Based on the control data of the flowchart of a top-level module, constant, structure, variable and function definitions for the top-level module can be generated at the integrating stage 150. The profiling report and topology of the multi-core processor can be used for placing and routing top-level modules on the multi-core processor. Additionally, hints of place and route can be supplied to the source code generator 160 in order to obtain a faster and more efficient placing and routing. Based on this information, the source code for each processor core can be generated automatically, which includes communication between processor cores.

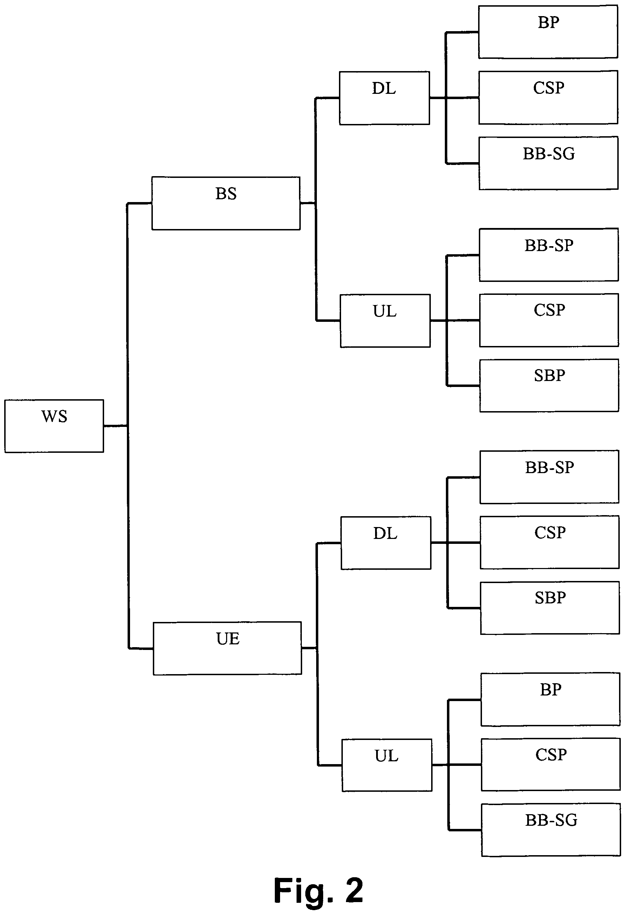

Fig. 2 shows an example of a division of a wireless system into sub-functions so as to be automatically mapped onto a multi-core processor. In the example of Fig. 2, the wireless system (WS) is split into a transmit side of either a base station (BS) or a user equipment (UE). As regards the base station, the transmit side corresponds to the downlink (DL) direction and can be divided into a bit processing (BP) sub-function, a complex symbol processing (CSP) sub-function and a baseband signal generator (BB-SG) sub-function. The same sub-functions can be obtained on the receiver side of the user equipment or mobile station and corresponds to its uplink (UL) direction. The bit processing sub-function may be composed of a cyclic redundancy code (CRC) appending, channel coding, rate matching, channel interleaving and scrambling. The complex symbol processing sub-function may include modulation, layer mapping and precoding. For orthogonal frequency division multiple access (OFDMA) based systems, the baseband signal generator sub-function may be composed of resource mapping, inverse fast Fourier transformation (IFFT) and cyclic prefix insertion. For code division multiple access (CDMA) based systems, the baseband signal generator sub-function may be implemented by spreading.

The receiver side corresponds to the UL direction of the base station or the DL direction of the user equipment and can be divided into a baseband signal processing (BB-SP) sub-function, a complex symbol processing (CSP) sub-function and a soft bit processing (SBP) sub-function. The baseband signal processing sub-function on the receiver side can be adapted to perform an opposite or inverse processing of the baseband signal generator on the transmitter side. The complex symbol processing sub-function on the receiver side may comprise channel estimation, equalizing and soft demodulation. The soft bit processing sub-function can be adapted to perform the opposite or inverse procedure of the bit processing sub-function on the transmitter side, such as channel de-interleaving, rate-dematching, channel decoding and CRC verification.

Due to the above decomposition of the wireless system into sub-functions, connections between sub-functions or modules can be very simple and unidirectional. The obtained sub-functions are modularized, organized and named based on the decomposition of the wireless system, as shown in Fig. 2. As an example, if one sub-function can exist in both base station and user equipment, it could be named as common sub-function and stored in a specific memory portion or folder for common functions. If one sub-function is only used in one transmission direction (e.g. downlink) at the base station side, the sub-function could be named as "basestation_downlink_functionname" and stored in a specific memory portion or folder designated for the downlink direction of the base station.

The computing load of each sub-function in the wireless system is important for mapping the wireless system on the multi-core processor. As an example, the computing load one sub-function could be evaluated in terms of cycle counts. The cycle count of each sub-function can be logged after a unit test is done.

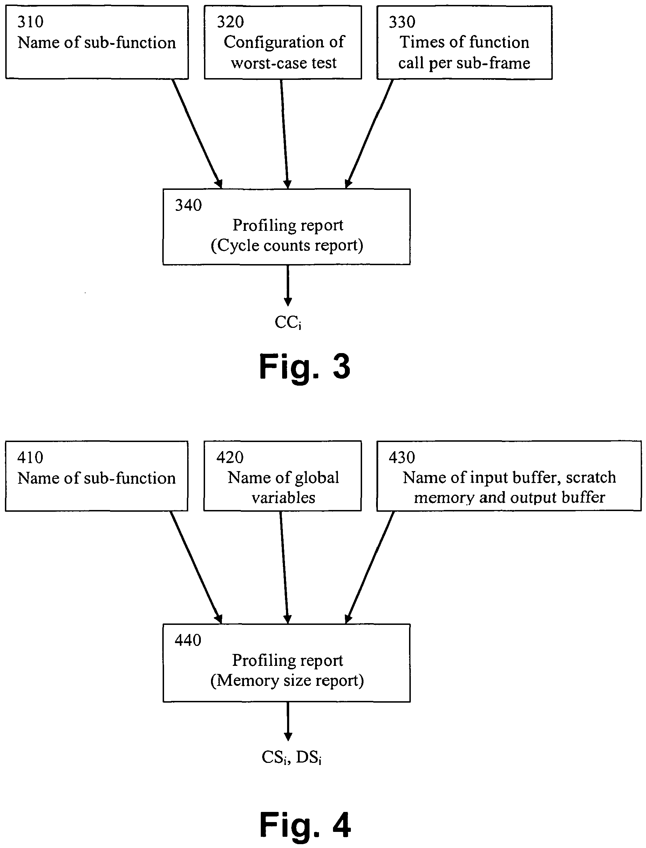

Fig. 3 shows a composition of a cycle counts report 340 as a part of a profiling report. It includes the name 310 of the sub-function, the configuration 320 of a worst-case test and times 330 of function call per sub-frame. The cycle counts (CCᵢ) for each sub-function can be extracted in a systematic way if a list of all sub-functions with worst-case test for each sub-function, number of times 330 to execute a sub-function per sub-frame can be supplied.

Fig. 4 shows a composition of a memory size report 440 as a part of the profiling report. The memory size report 440 includes the name 410 of the sub-function, the name 420 of global variables, and information 430 including name of input buffer, scratch memory and output buffer. Based on this information code size (CSᵢ) and data memory size (DSᵢ) of each sub-function can be obtained. The information about code size and data memory size can be extracted from the executable binary code of each sub-function's test bench. A list of function name, global variables including a look-up table, input memory, scratch memory and output memory for each sub-function could be provided and then, the profiling stage 120 of Fig. 1 can generate a list of code size and data memory size for all sub-functions.

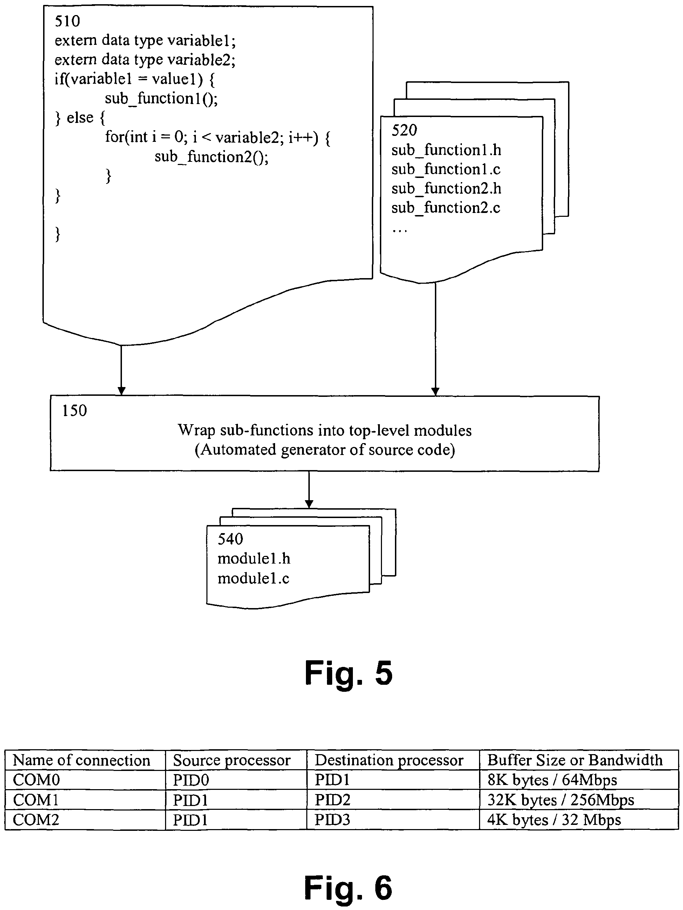

Fig. 5 shows a flow diagram for generating top-level modules 540. The obtained sub-functions can be integrated into top-level modules to be executed on the same processor core or same types of processor cores. Sub-functions 520 are executed sequentially in one top-level module 540. For example, a flowchart for "module1" comprises the instruction: *"if "variable1" equal "value1", "sub_function1" shall be executed, otherwise, "sub_function2" shall be executed for "variable2" times".* The source code for this "module1" can be generated from the flowchart automatically. The integrating stage 150 of Fig. 1 will extract all necessary information from the flowchart of "module1" 510 and source code of "sub_function1" and "sub_function2". Then, all constant, variable, structure and function definitions for "module1" 510 can be generated automatically and stored in files "module1.h" and "module1.c" of the source code 540 of the top-level module. Thus, in order to generate the source code 540 for the top-level module, the sub-functions' interface should be defined properly. The data structure of input buffer and output buffer as well as scratch memory should be defined explicitly. Furthermore, the class definition (structure definition) of one sub-function should include the input parameters, pointer of input data structure and pointer of a scratch memory as well as pointer of output data structure in the respective memory. With all this information, the integrating stage 150 knows how to generate the source code 540 for the top-level module from the flowchart of top-level module.

The source code 540 for each top-level module comprises a class definition which includes the definition of object variables for all sub-functions. External variables declared in the flowchart 510 of the top-level module can be defined in the class definition of the top-level module. As shown in Fig. 5, the parameters "variable1" and "variable2" together with object variables of "sub_function1" and "sub_function2" can be defined in the class definition of the top-level module.

Normally, in a wireless system, connections between sub-functions are unidirectional, so that data processing should proceed through sub-functions in a sequential manner. The integrating stage 150 can read the flowchart of the top-level module and find the executing path of the included sub-functions. In each path, the sub-functions can be numbered according to the sequence in the executing path. Then, the input data structure of the top-level module should be the same to the first sub-function's input data structure in the executing path. If different executing paths consume different input data, the input data structure of the top-level module should include the first sub-function's input data structure in each executing path. The output data structure of the top-level module corresponds to the last sub-function's output data structure in the executing path. If different executing paths produce different output data, the output data structure of the top-level module should include the last sub-function's output data structure in each executing path.

In order to organize the top-level module's scratch memory, some rules should be obeyed. The scratch memory of all sub-functions in one executing path can be shared, which means that the scratch memory of the top-level module should correspond to the maximum size of all sub-function's scratch memories. In this connection, a scratch memory is memory portion reserved outside the sub-function wherein pointers are assigned to memory locations so as to access them. Thereby, static variables do not have to be declared in the sub-function.

Except the input memory of the first sub-function and the output memory of the last sub-function in each executing path, the input memory and the output memory of the other sub-functions can be located in the scratch memory of the top-level module. Sub-functions in different executing paths can always share input memory and output memory. Non-neighboring sub-functions in one executing path can share input and output memory.

The scratch memory of the top-level module may be composed of three memory blocks. The first memory block may be of the maximum size of all scratch memories for all sub-functions. The second memory block may be of the maximum size of all output memories for all sub-functions with odd number if the sub-functions are numbered according to their executing sequence. The third memory block may be of a maximum size of all output memories for all sub-functions with even number except for the last one.

Fig. 6 shows an example of a specification of the topology of a multi-core processor from a programming point of view. The topology can be defined based on connection between processors. One connection only has one source processor and one destination processor, wherein the buffer size or bandwidth for each connection could be defined as well. Placing and routing can be done automatically if the topology of the multi-core processor and the profiling results of each top-level module are known. Due to the fact that connections between modules in the wireless systems are unidirectional and simple, some hints of place and route can be provided to the source code generator 160 to make placing and routing faster and more efficient.

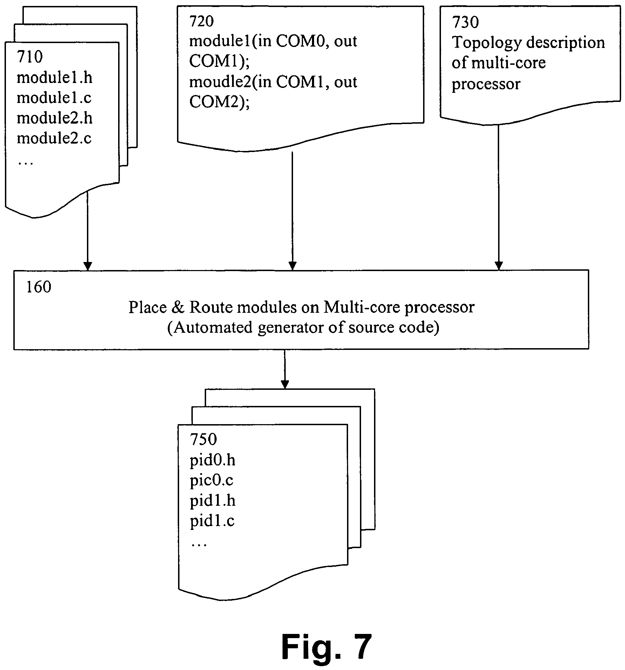

Fig. 7 shows a flowchart of an automatic generation of source code 750 for each processor core. As shown in Fig. 7, hints 720 of place and route can be defined like "module1(in COM0, out COM1)" which means that "module1" shall get input data from connection "COM0" and shall then output data to connection "COM1" after data processing is done. The top-level source code 750 for processor code "PID1" can be generated automatically by the source code generator 160 and stored into files "pid1.h" and "pid1.c". In the top-level source code 750 for each processor core, a thread can be created for each input connection. The entry function of each thread can be configured to fetch data from the input connection and process the data by executing the top-level module and sending data to the output connection. According to Fig. 7, the source code generator 160 automatically generates the source code 750 for each processor core based on the supplied top-level modules 710, hints 720 and topology description 730 of the multi-core processor.

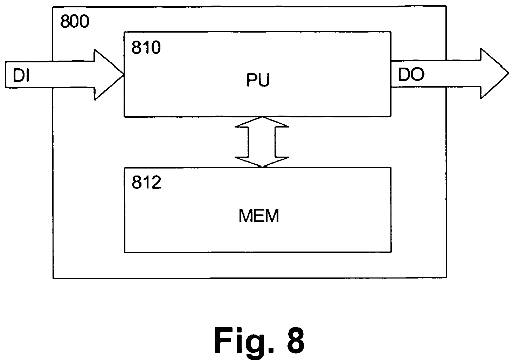

Fig. 8 shows a schematic block diagram of an alternative software-based implementation according to another embodiment. The required functionalities can be implemented in a computer device 800 with a processing unit 810, which may be any processor or computer device with a control unit which performs control based on software routines of a control program stored in a memory 812. The control program may also be stored separately on a computer-readable medium. Program code instructions are fetched from the memory 812 and are loaded to the control unit of the processing unit 810 in order to perform the processing steps of Figs. 1, 5 and 7, which may be implemented as the above mentioned software routines. The processing steps may be performed on the basis of input data DI and may generate output data DO. In the present mapping system, the input data DI may correspond to at least one of the sub-functions, profiling reports, flowcharts and processor topologies, and the output data DO may correspond to at least one of the source code and test bench for each processor core.

Consequently, the functionalities of the above embodiments may be implemented as a computer program product comprising code means for generating each individual step of the mapping procedure when run on a computer device or data processor.

In summary, a method and apparatus for mapping a communication system on a multi-core processor has been described, wherein the communication system is divided into a plurality of sub-functions and information about code size and data memory size for each sub-function is extracted from a profiling report. Sub-functions to be executed on same types of processor cores are integrated into top-level modules which are placed and routed on the multi-core processor so as to generate top-level source code for each processor core.

It is apparent that the invention can easily be extended to any software environment which may include a collection of hardware and software technologies where some or all of the operating functions are implemented through modifiable software or firmware operating on programmable processing technologies. Such devices include field programmable gate arrays (FPGAs), DSPs, general purpose processors (GPPs), programmable System on Chip (SoC) or other application specific programmable processors. The use of these technologies allows new wireless features and capabilities to be added to existing radio systems without requiring new hardware. Moreover, any kind of communication system, not necessarily a wireless system, can be mapped proposed system on a multi-core processor. The embodiments may thus vary within the scope of the attached claims.

## Claims

1. A method of mapping a communication system on a multi-core processor, said method comprising:
a) dividing (110) said communication system into a plurality of sub-functions, which communicate with each other by uni-directional connections, and wherein interface and memory size of input buffer and output buffer as well as scratch memory for each sub-function are declared explicitly;
b) extracting (120) information about code size and data memory size for each sub-function from a profiling report;
c) integrating (150) sub-functions to be executed on same types of processor cores into top-level modules;
d) placing and routing (160) said top-level modules on said multi-core processor; and
e) generating (160) top-level source code for each processor core based on said top-level modules.

2. The method according to claim 1, wherein said profiling report comprises a cycle counts report obtained from a worst-case test and times of call of said sub-functions per sub-frame.

3. The method according to claim 1 or 2, wherein said profiling report comprises a memory size report obtained from global variables, input buffer, scratch memory and output buffer of said sub-functions.

4. The method according to any one of the preceding claims, wherein said placing and routing comprises defining a source processor, a destination processor, and a bandwidth or buffer size of communication channels on said multi-core processor.

5. The method according to any one of the preceding claims, further comprising dividing a transmitter side of a communication device into a bit processing sub-function, a complex symbol processing sub-function, and a baseband signal generator sub-function.

6. The method according to any one of the preceding claims, further comprising dividing a receiver side of a communication device into a baseband signal processing sub-function, a complex symbol processing sub-function, and a soft bit processing sub-function.

7. The method according to any one of the preceding claims, further comprising dividing said sub-functions into common sub-functions which exist in a transmitter side and a receiver side of a communication device, and specific sub-functions which exist either in the transmitter side or the receiver side.

8. The method according to any one of the preceding claims, further comprising extracting cycle counts of each sub-function based on a list of all sub-functions with worst-case test for each sub-function and number of times to execute a sub-function per sub-frame.

9. The method according to any one of the preceding claims, further comprising extracting said information about code size and data memory size from executable binary code of a test bench of each sub-function.

10. The method according to any one of the preceding claims, further comprising generating a flowchart which describes how sub-functions are executed sequentially in one top-level module and automatically generating said source code based on said flowchart.

11. The method according to claim 10, further comprising determining an executing path of sub-functions based on said flowchart.

12. The method according to any one of the preceding claims, further comprising defining a topology of said multi-core processor by connections between processors, wherein one connection only comprises one source processor and one destination processor.

13. An apparatus for mapping a communication system on a multi-core processor, said apparatus comprising:
a) sub-function developing means (110) for dividing said communication system into a plurality of sub-functions;
b) profiling means (120) for extracting information about code size and data memory size for each sub-function from a profiling report;
c) integrating means (150) for integrating sub-functions to be executed on same types of processor cores into top-level modules; and
d) source code generating means (160) for placing and routing said top-level modules on said multi-core processor and for generating top-level source code for each processor core.

14. An apparatus according to claim 13, wherein said source code generating means (150) is adapted to create a thread for an input connection of a processor core, and wherein an entry function of said thread is adapted to fetch data from said input connection, process the data by executing at least one top-level module, and send process data to an output connection of said processor core.

15. A computer program product comprising code means for producing the steps of any one of claims 1 to 12 when run on a computing device (800).
